# EUROPÄISCHE PATENTSCHRIFT

(11) **EP 0 996 525 B1**
(45) Veröffentlichungstag und Bekanntmachung des Hinweises auf die Patenterteilung: **12.12.2001**
(21) Anmeldenummer: 98922662.6
(22) Anmeldetag: 08.04.1998
(51) Int. Cl.: B23Q 1/28

(54) **BREMSVORRICHTUNG FÜR EINE LINEARFÜHRUNG**
BRAKING DEVICE FOR A LINEAR DRIVE
DISPOSITIF DE FREINAGE POUR ENTRAINEMENT LINEAIRE

(30) Priorität: 18.07.1997 DE 19730813
(43) Veröffentlichungstag der Anmeldung: 03.05.2000
(73) Patentinhaber: INA Wälzlager Schaeffler oHG, 91072 Herzogenaurach (DE)
(72) Erfinder: RUDY, Dietmar, D-67655 Kaiserslautern (DE)
(86) Internationale Anmeldenummer: EP9802027
(87) Internationale Veröffentlichungsnummer: WO9903638

(56) Entgegenhaltungen:
- WO-A-92/20490
- DE-U- 29 505 080
- GB-A- 926 072
- US-A- 4 751 864
- US-A- 4 819 921
- US-A- 5 302 062

## Beschreibung

### Gebiet der Erfindung

Die Erfindung betrifft eine Bremsvorrichtung für eine Linearführung mit einem längs einer Führungsschiene verfahrbaren Tragkörper, welcher auf die Führungsschiene einwirkende Bremsbacken und einen Bremskolben enthält, der in einem Bremszylinder des Tragkörpers von einem Druckmittel verschiebbar angeordnet ist, wobei die Bremsvorrichtung außerdem als Energiespeicher eine Druckfeder enthält, die auf das von dem Bremskolben begrenzte Druckmittel einwirkt.

### Hintergrund der Erfindung

Linearführungen werden unter anderem bei Werkzeugmaschinen mit Hochgeschwindigkeitsantrieben, Lineartischen und Laserbearbeitungsmaschinen verwendet. Aus dem DE-GM 295 05 080 ist eine Bremsvorrichtung für eine Linearführung bekannt, bei der die Brems- oder Klemmkraft von dem Druckmittel, z. B. einem hydraulischen Druckmittel wie Öl, aufgebracht wird. Aus sicherheitstechnischen Aspekten ist diese Linearführung jedoch ungeeignet, denn wenn in dem Druckmittel ein ungewollter Druckabbau eintritt, kann ein Bremsen oder Festklemmen des Tragkörpers an der Führungsschiene nicht mehr erfolgen.

### Zusammenfassung der Erfindung

Der Erfindung liegt die Aufgabe zugrunde, eine Linearführung zu schaffen, deren Tragkörper in Notsituatinen wie Druckmittelausfall in sicherer Weise an der Führungsschiene mechanisch abgebremst und verklemmt werden kann.

Diese Aufgabe wird erfindungsgemäß dadurch gelöst, daß zwischen der Druckfeder und dem Bremskolben eine Kolben-Zylinder-Einheit angeordnet ist, mit einem einstückigen Steuerelement, welches in einem Steuerdruckraum einen auf die Druckfeder gerichteten verschiebbaren Steuerkolben größeren Durchmessers und in einem Hochdruckraum einen auf den Bremskolben gerichteten verschiebbaren Hochdruckkolben geringeren Durchmessers aufweist, wobei an dem Tragkörper ein Druckanschluß zur Einleitung des Druckmittels in den Steuerdruckraum angeordnet ist. Auf diese Weise ergibt sich ein hydromechanisches Notbremssystem, bei dem die Bremsenergie über den in der Bremsvorrichtung befindlichen Energiespeicher bereitgestellt wird.

Die als Energiespeicher wirkende Druckfeder kann von einer Schraubendruckfeder, einer Tellerfeder oder von Federscheiben gebildet sein. Es ist aber auch möglich, hierfür einen Gasdruckreservoir zu verwenden.

Der Steuerkolben, der Hochdruckkolben und die Druckfeder können eine gemeinsame, in Führungsrichtung des Tragkörpers verlaufende Längsachse aufweisen. Dadurch ergibt sich ein großer möglicher Hub des Hochdruckkolbens, was aus sicherheitstechnischen Gründen erwünscht ist.

In oder an dem Tragkörper kann ein Ausgleichsbehälter für das Druckmittel angeordnet sein, welcher über eine Druckmittelleitung mit dem Hochdruckraum und dem Bremszylinder verbunden ist. Ein solcher Ausgleichsbehälter ermöglicht es, einen Verschleiß der Bremsbacke und Leckverluste durch Nachströmen des Druckmittels auszugleichen. In diesem Fall ist es sinnvoll, in dem Tragkörper zwischen dem Ausgleichsbehälter und der Druckmittelleitung ein Rückschlagventil anzuordnen.

Der Ausgleichsbehälter kann zweckmäßigerweise zylindrisch ausgebildet sein und für ein darin befindliches veränderliches Druckmittelvolumen einen verschieblichen Ausgleichskolben enthalten.

### Kurze Beschreibung der Zeichnungen

Ein Ausführungsbeispiel der Erfindung ist in den Zeichnungen dargestellt und wird im folgenden näher beschrieben. Es zeigen:

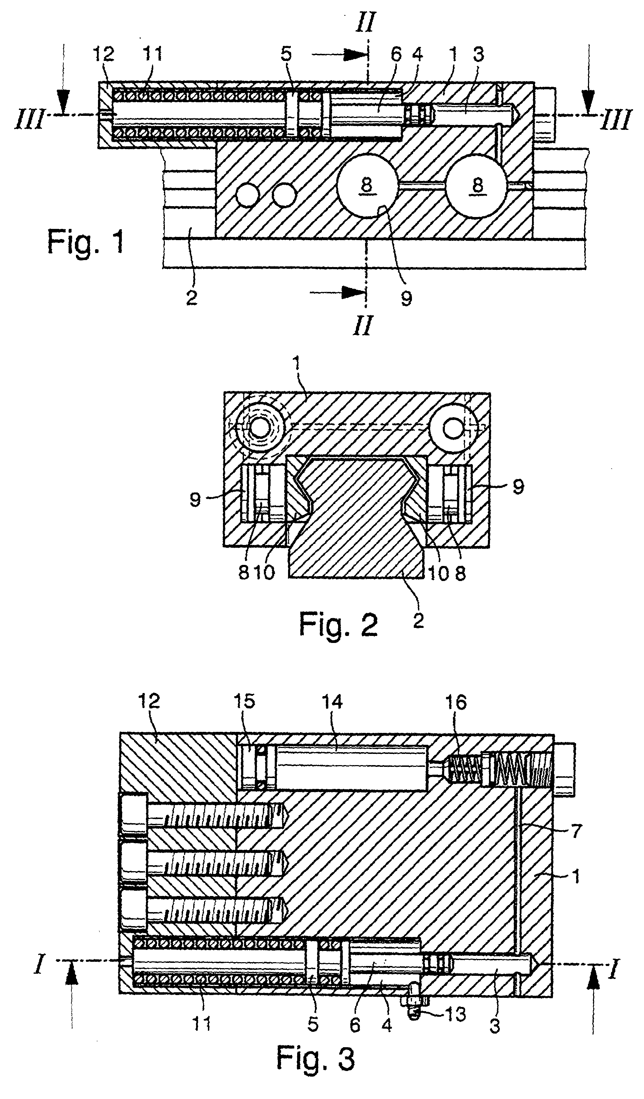

- Figur 1: eine Seitenansicht einer Führungsschiene und einen daran verschiebbaren Tragkörper in einem Längsschnitt gemäß Linie I-I der Figur 3, wobei jedoch wie auch bei den nachfolgenden Figuren auf die Anbringung von Schraffuren verzichtet wurde;
- Figur 2: einen Querschnitt durch den an der Führungsschiene abgestützten Tragkörper gemäß Linie II-II der Figur 1;
- Figur 3: einen Längsschnitt durch den Tragkörper gemäß Linie III-III der Figur 1.

### Ausführliche Beschreibung der Zeichnungen

Die erfindungsgemäße Bremsvorrichtung ist als Zusatzelement zu den Führungswagen von Linearwälzführungen ausgelegt. In einem Tragkörper 1 einer Linearführung, der längs einer Führungsschiene 2 verschiebbar ist, sind in Führungsschienenlängsrichtung ein als Bohrung ausgebildeter Hochdruckraum 3 und ein Steuerdruckraum 4 angeordnet, der als zu dem Hochdruckraum 3 koaxiale Bohrung, jedoch mit größerem Durchmesser als dieser, ausgeführt ist. In diesen beiden Bohrungen befindet sich ein Steuerelement, welches aus einem in dem Steuerdruckraum 4 angeordneten Steuerkolben 5 und einem in dem Hochdruckraum 3 angeordneten Hochdruckkolben 6 besteht. Der Steuerkolben 5 und der Hochdruckkolben 6 sind als einstückiges Bauteil ausgeführt. Der Hochdruckkolben 6 mit dem kleineren Durchmesser ist mit einer Teillänge axial verschieblich in dem Hochdruckraum 3 angeordnet, während sich der Steuerkolben 5 mit dem größeren Durchmesser ebenfalls axial verschieblich in dem Steuerdruckraum 4 befindet.

Der Hochdruckraum 3 ist über Druckmittelleitungen 7, die als dünne Verbindungsbohrungen ausgeführt sind, mit zwei in dem Tragkörper 1 angeordneten, Bremskolben 8 enthaltenden Bremszylindern 9 verbunden. Jeder Bremskolben 8 ist in einem Bremszylinder 9 zu der Führungsschiene 2 hin verschiebbar angeordnet, wobei die Verschieberichtung rechtwinkelig zur Längsachse der Führungsschiene 2 verläuft. Zwischen den Bremskolben 8 und der Führungsschiene 2 sind Bremsbacken 10 angeordnet. Alle Druckräume, also der Steuerdruckraum 4, der Hochdruckraum 3, die Druckmittelleitungen 7 und die Bremszylinder 9, sind mit einem Druckmedium, beispielsweise einem Hydrauliköl, befüllt.

Die Bremsenergie wird nicht von außen zugeführt, sondern innerhalb der Vorrichtung bereitgestellt. Dies geschieht mit einem Energiespeicher in der Form einer als Schraubenfeder ausgebildeten Druckfeder 11, über die der Steuerkolben 5 an einem mit dem Tragkörper 1 verschraubten Vorsatzgehäuse 12 abgestützt ist.

Der Steuerdruckraum 4 wird über einen Druckmittelanschluß 13 mit einem Druckmittel beaufschlagt, welches unter einem Steuerdruck von ca. 50 bar steht. Dadurch wird der Steuerkolben 5 gegen die vorgespannte Druckfeder 11 gedrückt und der Hochdruckkolben 6 vollständig entlastet. Damit sind der Hochdruckraum 3 und die mit ihm verbundenen Druckmittelleitungen 7, die zu den Bremszylindern 9 mit den Bremskolben 8 führen, drucklos. Der Tragkörper 1 ist nun auf der Führungsschiene 2 frei verschieblich.

Wird bei Auslösung einer Notsituation der Steuerdruck schlagartig auf den Umgebungsdruck von 1 bar reduziert, dann überträgt die Druckfeder 11 ihre Vorspannkraft über den Steuerkolben 5 vollständig auf den Hochdruckkolben 6. Dieser wird von der Vorspannkraft der Druckfeder 11 weiter in den Hochdruckraum 3 hineingedrückt und erzeugt dort aufgrund seiner kleinen Kolbenfläche in dem Druckmittel einen Druck von mehreren hundert bar. Der Druck wirkt über die Druckmittelleitungen 7 auf die in den Bremszylindern 9 angeordneten Bremskolben 8 und diese pressen die Bremsbacken 10 gegen die Führungsschiene 2.

Zur Erhöhung der Betriebssicherheit und zum Ausgleich des Bremsbackenverschleißes ist in der Vorrichtung ein Druckmittel- oder Ölreservoir in Form eines integrierten Ausgleichsbehälters 14 vorgesehen, der zum einen gegenüber der Umgebung mit einem leicht verschiebbaren Ausgleichskolben 15 abgedichtet ist. Zum anderen ist der Ausgleichsbehälter 14 über ein Rückschlagventil 16 mit dem Hochdruckraum 3 verbunden. Sollte nun durch Verschleiß der Bremsbacken 10 oder durch geringe Leckverluste, die an der Kolbendichtung des Hochdruckkolbens 6 auftreten, mit der Zeit der Hochdruckkolben 6 weiter in den als Bohrung ausgeführten Hochdruckraum 3 hineinwandern, so würde ohne einen Ausgleichsbehälter die Kraft der Druckfeder 11 und damit die Bremskraft absinken. Wird jedoch nun die mit dem Ausgleichsbehälter 14 ausgestattete Bremsvorrichtung, etwa beim Einschalten der zugehörigen Maschine, im Steuerdruckraum 4 mit einem Druckmittel beaufschlagt, dann wird der Steuerkolben 5 die Druckfeder 11 zusammendrücken. Dadurch werden der Hochdruckkolben 6 aus dem Hochdruckraum 3 herausgezogen und die Bremskolben 8 entlastet. Bei Erreichen eines bestimmten Unterdruckes im Hochdruckraum 3 öffnet sich das Rückschlagventil 16 und liefert Druckflüssigkeit je nach Bedarf nach.

Der Vorteil der Verwendung des Ausgleichsbehälters 14 liegt darin, daß damit auch bei Verschleiß der Bremsbacken 10 immer mit der vollen Bremskraft gebremst werden kann. Die erfindungsgemäße, auch als Notbremse wirkende Bremsvorrichtung arbeitet somit wartungsfrei, ein aufwendiger Austausch von Bremsbacken ist nicht mehr erforderlich.

### Bezugszeichen

- 1: Tragkörper
- 2: Führungsschiene
- 3: Hochdruckraum
- 4: Steuerdruckraum
- 5: Steuerkolben
- 6: Hochdruckkolben
- 7: Druckmittelteitung
- 8: Bremskolben
- 9: Bremszylinder
- 10: Bremsbacke
- 11: Druckfeder
- 12: Vorsatzgehäuse
- 13: Druckmittelanschluß
- 14: Ausgleichsbehälter
- 15: Ausgleichskolben
- 16: Rückschlagventil

## Patentansprüche

1. Bremsvorrichtung für eine Linearführung mit einem längs einer Führungsschiene (2) verfahrbaren Tragkörper (1), welcher auf die Führungsschiene (2) einwirkende Bremsbacken (10) und einen Bremskolben (8) enthält, der in einem Bremszylinder (9) des Tragkörpers (1) von einem Druckmittel verschiebar angeordnet ist, wobei die Bremsvorrichtung außerdem als Energiespeicher eine Druckfeder (11) enthält, die auf das von dem Bremskolben (8) begrenzte Druckmittel einwirkt, **dadurch gekennzeichnet, daß** zwischen der Druckfeder (11) und dem Bremskolben (8) eine Kolben-Zylinder-Einheit angeordnet ist, mit einem einstückigen Steuerelement, welches in einem Steuerdruckraum (4) einen auf die Druckfeder (11) gerichteten verschiebbaren Steuerkolben (5) größeren Durchmessers und in einem Hochdruckraum (3) einen auf den Bremskolben (8) gerichteten verschiebbaren Hochdruckkolben (6) geringeren Durchmessers aufweist, wobei an dem Tragkörper (1) ein Druckanschluß (13) zur Einleitung des Druckmittels in den Steuerdruckraum (4) angeordnet ist.

2. Vorrichtung nach Anspruch 1, **dadurch gekennzeichnet, daß** in dem Tragkörper (1) zwei Bremszylinder (9) mit jeweils einem auf eine Bremsbacke (10) und die Führungsschiene (2) gerichteten Bremskolben (8) angeordnet sind.

3. Vorrichtung nach Anspruch 1, **dadurch gekennzeichnet, daß** die als Energiespeicher wirkende Druckfeder von einer Schraubendruckfeder, einer Tellerfeder oder von Federscheiben gebildet ist.

4. Vorrichtung nach Anspruch 1, **dadurch gekennzeichnet, daß** die als Energiespeicher wirkende Druckfeder von einem Gasdruckreservoir gebildet ist.

5. Vorrichtung nach Anspruch 1, **dadurch gekennzeichnet, daß** der Steuerkolben (5), der Hochdruckkolben (6) und die Druckfeder (11) eine gemeinsame, in Führungsrichtung des Tragkörpers (1) verlaufende Längsachse aufweisen.

6. Vorrichtung nach Anspruch 1, **dadurch gekennzeichnet, daß** in oder an dem Tragkörper (1) ein Ausgleichsbehälter (14) für das Druckmittel angeordnet ist, welcher über eine Druckmittelleitung (7) mit dem Hochdruckraum (3) und dem Bremszylinder (9) verbunden ist.

7. Vorrichtung nach Anspruch 6, **dadurch gekennzeichnet, daß** in dem Tragkörper (1) zwischen dem Ausgleichsbehälter (14) und der Druckmittelleitung (7) ein Rückschlagventil (16) angeordnet ist.

8. Vorrichtung nach Anspruch 6, **dadurch gekennzeichnet, daß** der Ausgleichsbehälter (14) zylindrisch ausgebildet ist und für ein darin befindliches veränderliches Druckmittelvolumen einen verschieblichen Ausgleichskolben (15) enthält.

## Claims

1. A braking device for a linear guide having a carrier body (1) that can travel along a guide rail (2) and comprises brake shoes (10) acting on the guide rail (2) and a brake piston (8) that is arranged for displacement by a pressure medium in a brake cylinder (9) of the carrier body (1), the braking device further comprising an energy reservoir in the form of a compression spring (11) acting on the pressure medium that is limited by the pressure piston (8), **characterised in that** between the compression spring (11) and the brake piston (8) is arranged a piston/cylinder unit having a one-piece control element comprising, in a control pressure chamber (4), a slidable control piston (5) of larger diameter directed towards the compression spring (11) and, in a high pressure chamber (3), a slidable high pressure piston (6) of smaller diameter directed towards the brake piston (8), a pressure connection (13) for supplying pressure medium to the control pressure chamber (4) being arranged on the carrier body (1).

2. A device according to Claim 1, **characterised in that** two brake cylinders (9) are arranged in the carrier body (1), each brake cylinder (9) having a brake piston (8) directed towards a brake shoe (10) and towards the guide rail (2)

3. A device according to Claim 1, **characterised in that** the compression spring acting as an energy reservoir is constituted by a coil compression spring, a disk spring or spring washers.

4. A device according to Claim 1, **characterised in that** the compression spring acting as an energy reservoir is constituted by a gas pressure reservoir.

5. A device according to Claim 1, **characterised in that** the control piston (5), the high pressure piston (6) and the compression spring (11) have a common longitudinal axis extending in the guide direction of the carrier body (1).

6. A device according to Claim 1, **characterised in that** a compensating reservoir (14) for the pressure medium is arranged in or on the carrier body (1) and is connected through a pressure medium duct (7) to the high pressure chamber (3) and the brake cylinder (9).

7. A device according to Claim 6, **characterised in that** a one-way valve (16) is arranged in the carrier body (1) between the compensating reservoir (14) and the pressure medium duct (7).

8. A device according to Claim 6, **characterised in that** the compensating reservoir (14) has a cylindrical configuration and comprises a slidable compensating piston (15) for a variable pressure medium volume contained therein.

## Revendications

1. Dispositif de freinage pour un guide linéaire ayant un corps de support (1) qui est déplaçable le long d'un rail de guidage (2) et comprend des mâchoires de frein (10) qui agissent sur le rail de guidage (2) et un piston de frein (8) qui est déplaçable dans un cylindre de frein (9) du corps de support (1) par un milieu sous pression, le dispositif de freinage comprenant, en plus, un réservoir d'énergie sous la forme d'un ressort de pression (11) qui agit sur le milieu sous pression délimité par le piston de frein (8), **caractérisé en ce que**, entre le ressort de pression (11) et le piston de frein (8), est agencée une unité piston/cylindre comportant un élément de commande mono-pièce qui comprend, dans une chambre à pression de commande (4), un piston coulissant de commande (5) de plus grand diamètre orienté vers le ressort de pression (11) et, dans une chambre à haute pression (3), un piston coulissant de haute pression (6) de plus petit diamètre orienté vers le piston de frein (8), un raccord de pression (13) pour l'amenée du milieu sous pression à la chambre à pression de commande (4) étant agencé sur le corps de support (1).

2. Dispositif selon la revendication 1, **caractérisé en ce que** deux cylindres de frein (9) sont agencés dans le corps de support (1), chacun des ces cylindres de frein (9) comprenant un piston de frein (8) orienté vers une mâchoire de frein (10) et vers le rail de guidage (2).

3. Dispositif selon la revendication 1, **caractérisé en ce que** le ressort de pression agissant comme réservoir d'énergie est constitué d'un ressort de pression à boudin, d'un ressort Belleville ou de ressorts plats.

4. Dispositif selon la revendication 1, **caractérisé en ce que** le ressort de pression agissant comme réservoir d'énergie est constitué d'un réservoir de pression de gaz.

5. Dispositif selon la revendication 1, **caractérisé en ce que** le piston de commande (5), le piston de haute pression (6) et le ressort de pression (11) ont un axe longitudinal commun s'étendant selon la direction de guidage du corps de support (1).

6. Dispositif selon la revendication 1, **caractérisé en ce qu'un** réservoir de compensation (14) du milieu sous pression est agencé dans ou sur le corps de support (1) et est relié par un conduit de milieu sous pression (7) à la chambre à haute pression (3) et au cylindre de frein (9).

7. Dispositif selon la revendication 6, **caractérisé en ce qu'**un clapet anti-retour (16) est agencé dans le corps de support (1) entre le réservoir de compensation (14) et le conduit de milieu sous pression (7).

8. Dispositif selon la revendication 6, **caractérisé en ce que** le réservoir de compensation (14) a une forme cylindrique et comporte un piston coulissant de compensation (15) pour un volume variable de milieu sous pression qui s'y trouve.
